# EUROPÄISCHE PATENTSCHRIFT

(11) **EP 3 649 352 B1**
(45) Veröffentlichungstag und Bekanntmachung des Hinweises auf die Patenterteilung: **16.06.2021**
(21) Anmeldenummer: 18737217.2
(22) Anmeldetag: 29.06.2018
(51) Int. Cl.: F15B 1/08, F15B 1/10, F16L 55/054, F24D 3/10, F15B 1/16

(54) **AUSGLEICHSVORRICHTUNG IN FORM EINES TANKS**
EQUALIZATION DEVICE IN THE FORM OF A TANK
DISPOSITIF DE COMPENSATION SOUS LA FORME D'UN RÉSERVOIR

(30) Priorität: 04.07.2017 DE 102017006305
(43) Veröffentlichungstag der Anmeldung: 13.05.2020
(73) Patentinhaber: Hydac Technology GmbH, 66280 Sulzbach/Saar (DE)
(72) Erfinder: KLOFT, Peter, 56235 Ransbach-Baumbach (DE); BALTES, Herbert, 66679 Losheim (DE); MEYER, Jörg, 77749 Hohberg (DE)
(74) Vertreter: Bartels und Partner, Patentanwälte
(86) Internationale Anmeldenummer: PCT/EP2018/067631
(87) Internationale Veröffentlichungsnummer: WO 2019/007845

(56) Entgegenhaltungen:
- DE-A1-102005 035 749
- DE-A1-102006 026 413
- DE-A1-102007 016 131
- GB-A- 2 176 589
- US-A1- 2009 095 366

## Beschreibung

Die Erfindung betrifft eine Ausgleichsvorrichtung dessen Gehäuse zumindest in einer seiner Gehäusewandungen mindestens einen Ein- und einen Auslass für die Aufnahme bzw. die Abgabe von Fluid aufweist und das mit dem Fluid auffüllbar ist.

In Anlagen verschiedenster Art, bei denen Flüssigkeiten als Systembestandteile zirkulieren oder gefördert werden, sind Behälter, wie Tanks, als Bestandteile vorhanden, die über Einlässe befüllbar und über Auslässe entleerbar sind. Beispielsweise zeigt die DE 10 2012 000 221 A1 tankartige Behälter mit Einrichtungen zur Flüssigkeitsaufnahme und -abgabe, die Bestandteil einer Einrichtung zur Entgasung von Flüssigkeiten bilden. Flüssigkeitsbehälter, wie Tanks, mit Ein- und Auslässen können auch als Ausgleichselement zur Kompensation von beim Betrieb betreffender Anlagen auftretenden Volumenschwankungen eingesetzt werden. DE102005035749A1 offenbart ferner ein Hydrospeicher mit einem Druckspeichergehäuse.

Der Erfindung liegt die Aufgabe zugrunde, eine Ausgleichsvorrichtung mit einem Flüssigkeitsbehälter, wie einem Tank, zur Verfügung zu stellen, der sich beim Einsatz zur Kompensation von Volumenschwankungen durch ein besonders günstiges Betriebsverhalten auszeichnet.

Erfindungsgemäß ist diese Aufgabe durch eine Ausgleichsvorrichtung gelöst, die die Merkmale des Patentanspruchs 1 in seiner Gesamtheit aufweist. Gemäß dem kennzeichnenden Teil des Anspruchs 1 zeichnet sich die Erfindung dadurch aus, dass innerhalb des Gehäuses mindestens ein Ausgleichskörper angeordnet ist, der unter Begrenzung seines Innenraums zumindest teilweise mit einer elastisch nachgiebigen Trennwand versehen ist, wobei der Innenraum bei Durchgriff einer der Gehäusewandungen mit der Umgebung zumindest teilweise in druckausgleichender Verbindung ist. Dadurch, dass bei der Erfindung im Gehäuse ein Ausgleichskörper angeordnet ist, bei dem eine elastisch nachgiebige Trennwand einen Innenraum einschließt, der zur Umgebung hin druckausgeglichen ist, steht dieser Innenraum als nachgiebiger Ausgleichsraum zur Verfügung, der sich entsprechend volumetrisch verändert, sobald im Betrieb des Tanks es zu Druckbelastungen der Trennwand kommt. Dies eröffnet die vorteilhafte Möglichkeit, den Tank in einem geschlossenen, hydraulischen System zu betreiben, weil selbst bei vollständiger Befüllung die Ausgleichsfunktion erhalten bleibt, die durch Volumenänderungen des Innenraums der elastisch nachgiebigen Trennwand verfügbar ist. Dadurch, dass der Tank in einem geschlossenen, hydraulischen Kreislauf betreibbar ist, besteht auch keine Gefahr eines Schmutzeintrags in das Fluid von der Außenseite des Tanks oder die Gefahr der Kontamination der Umgebung durch austretendes Fluid aus dem Tank.

Die erfindungsgemäße Ausgleichsvorrichtung soll derart realisiert sein, dass das Gehäuse, bis auf das Vorhandensein von Durchgriffsstellen, wie dem jeweiligen Ein- und dem Auslass sowie der jeweiligen druckausgleichenden Verbindung, eine geschlossene Umhausung für das in dem Gehäuse aufgenommene Fluid ausbildet, das ein zusätzliches Fluidvolumen aufnimmt, etwa gebildet aus einem Pendelvolumen des Fluids und/oder einer Volumenzunahme des im Gehäuse bevorrateten Fluids bei Temperaturerhöhung, das maximal dem Verdrängungsvolumen entspricht, das durch das Verformen der Trennwand des jeweiligen Ausgleichskörpers in Richtung seines Innenraums entsteht.

Ferner weist der Ausgleichskörper als elastisch nachgiebige Trennwand eine flexible Speicherblase aus Elastomermaterial auf, deren Innenraum zumindest teilweise mit Schaummaterial befüllt ist.

Mit Vorteil kann zur Befüllung der Speicherblase ein Schaummaterial vorgesehen sein, das offenzellig, hochporös und elastisch nachgiebig ausgebildet ist.

Die Anordnung ist so getroffen dass zum Schutz der Speicherblase vor Druckpulsationen und Druckstößen diese in einem Schutzgehäuse aufgenommen ist, das zumindest teilweise für einen Fluiddurchlass mit mindestens einer Durchlassstelle versehen ist.

Die flexible Speicherblase ist, gegebenenfalls zusammen mit ihrem Schutzgehäuse, an ihrer einer oberen Gehäusewand des Gehäuses zugewandten Oberseite unter Bildung des Durchgriffs für einen Luftaustausch zwischen dem Innenvolumen der Speicherblase und der Umgebung, über eine Halterung an dieser oberen Gehäusewand stationär festgelegt.

Dabei ist die Anordnung mit Vorteil so getroffen, dass die flexible Blase im unkomprimierten Zustand spindelförmig ist und in senkrechter Anordnung in das Gehäuse hineinragt.

Bei Ausführungsbeispielen, bei denen das Gehäuse mit seinen Gehäusewänden einen rechteckförmigen Vorratstank bildet, kann die flexible Speicherblase vorteilhafterweise in einem von der Durchströmung des Gehäuses zumindest teilweise unberührten Eckbereich in diesem festgelegt sein. Das Vermeiden einer heftigen Anströmung verringert die mechanische Belastung des Ausgleichskörpers durch Strömungskräfte sowie die Gefahr der Schaumbildung im Betrieb der Vorrichtung.

Mit besonderem Vorteil kann als Schaummaterial ein Polymerpolyol eingesetzt sein, das ausgehärtet einen Polyurethan (PU) - Weichschaum bildet, der mittels eines Vernetzers, wie Diglykolamin, vernetzt ist.

Für eine als Ausgleichselement dienende Speicherblase ist mit besonderem Vorteil ein Polylurethan-Weichschaum einsetzbar, der im fertig hergestellten Zustand eine Wärmekapazität von 20°C > 1J/gK, bevorzugt einen Wert zwischen 1,4 J/gK bis 1,9 J/gK, aufweist, bei einem Strömungswiderstand als Maß für die Porosität des Schaummaterials zwischen 1400 bis 3800 Ns/m³.

Nachstehend ist die Erfindung anhand eines in der Zeichnung dargestellten Ausführungsbeispiels im Einzelnen erläutert.

Es zeigen:
- Fig. 1: in schematisch vereinfachter Darstellung eine perspektivische Schrägansicht des Ausführungsbeispiels der erfindungsgemäßen Ausgleichsvorrichtung in Form eines Tanks; und
- Fig. 2: einen Längsschnitt des Ausgleichskörpers des Ausführungsbeispiels.

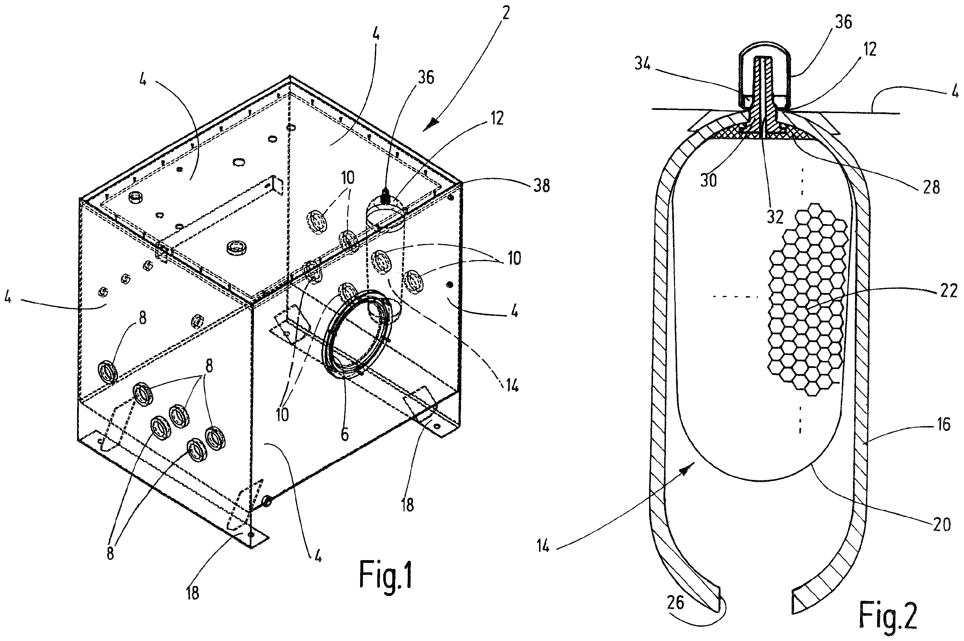

Die Fig. 1 zeigt in stark schematisch vereinfachter Darstellung das Ausführungsbeispiel in Form eines Tanks, dessen Gehäuse 2 die Form eines Würfels mit jeweils ebenflächigen Gehäusewänden 4 besitzt. Das Gehäuse 2 bildet für das Fluid einen Behälter, der mit Ausnahme von Durchgriffsstellen vollständig geschlossen ist. Bei der Darstellung von Fig. 1 ist von den Durchgriffsstellen eine normalerweise geschlossene Serviceöffnung mit 6 bezeichnet, die in zentraler Position an einer vertikalen Gehäusewand 4 angeordnet ist und im geöffneten Zustand den Zugang zum Gehäuseinneren ermöglicht. In der sich an die die Serviceöffnung 6 aufweisende Wand anschließenden, in Fig. 1 sichtbaren vertikalen Gehäusewand 4 sind als weitere Durchgriffsstellen sechs mit 8 bezeichnete Anschlussstellen vorgesehen, die jeweils einen Fluideinlass bilden. In der dazu gegenüberliegenden vertikalen Gehäusewand 4 sind ebenfalls sechs mit 10 bezeichnete Anschlussstellen vorgesehen, die jeweils einen Fluidauslass bilden. Als weitere und letzte Durchgriffsstelle ist in der oberen, horizontalen Gehäusewand 4 eine Verbindungsstelle 12 vorhanden, an der ein Ausgleichskörper 14 angebracht ist, der zusammen mit einem zugeordneten Schutzgehäuse 16 in Fig. 2 gesondert dargestellt ist. Die übrigen, in Fig. 1 sichtbaren und an den Gehäusewänden 4 befindlichen Bauelemente sind Anbau- oder Befestigungsteile, wie Fußleisten 18, die in den Gehäusewänden 4 keinen Durchgang zum Behälterinneren bilden.

Der Ausgleichskörper 14 weist als elastisch nachgiebige Trennwand eine flexible Speicherblase 20 auf, die mit einer Füllung 22 aus einem Schaummaterial versehen ist. Bei der bei der erfindungsgemäßen Ausgleichsvorrichtung vorgesehenen Füllung 22 ist ein offenzelliges Schaummaterial vorgesehen, das hochporös und elastisch nachgiebig ausgebildet ist. Beim vorliegenden Beispiel ist als Füllung 22 ein Polyurethan-Weichschaum vorgesehen. Es können jedoch auch andere hochporöse Schaumstoffe eingesetzt sein. Wie Fig. 2 zeigt, ist die Speicherblase 20 zum Schutz vor Druckpulsationen und Druckstößen im Schutzgehäuse 16 aufgenommen. Dieses besitzt beim vorliegenden Beispiel die Form einer im jeweiligen Querschnitt gesehen kreisrunden Speicherflasche als Speichergehäuse. Das Schutzgehäuse 16 kann aus Metall oder aus Laminaten gefertigt sein. In dem in Fig. 2 untenliegenden Ende weist das Schutzgehäuse 16 eine Öffnung 26 auf, über die die Speicherblase 20 im zusammengedrückten Zustand in das Schutzgehäuse 16 einsetzbar ist. Im unkomprimierten Zustand, wie er in Fig. 2 gezeigt ist, hat die flexible Speicherblase 20 die in der Figur gezeigte spindelförmige rotationssymmetrische Form. Am oberen Ende weist die Speicherblase 20 eine Verstärkung 28 auf, in die ein Anschlusskörper 30 eingearbeitet ist, der durch das Schutzgehäuse 16 nach außen ragt. Im Anschlusskörper 30, der die Form eines rotationssymmetrischen Zapfens besitzt, befindet sich ein koaxialer Durchgangskanal 32, der vom Inneren der Speicherblase 20 einen Durchgriff für den Luftaustausch zwischen der Innenseite der Speicherblase 20 und der Umgebung bildet. Der Anschlusskörper 30 bildet gleichzeitig die Verbindung der Speicherblase 20 samt Schutzgehäuse 16 an der Verbindungsstelle 12 der oberen Gehäusewand 4. Hierfür weist der Anschlusskörper 30 ein Außengewinde für eine Befestigungsmutter 34 auf, die eine Verschraubung mit der Gehäusewand 4 bildet. Das über die Gehäusewand 4 nach außen ragende Ende des Anschlusskörpers 30 ist durch eine auf die Mutter 34 aufgesteckte Schutzhaube 36 geschützt, die luftdurchlässig ausgebildet ist.

Das Einbringen der Schaum-Füllung 22 kann nach einem Verfahren durchgeführt werden, bei dem zur Bildung des Polyurethan-Weichschaums die Schaumkomponenten als fließfähige Mischung aus Polyolen, Katalysatoren und einem Vernetzer, wie die Diglykolamin, über den Kanal 32 im Anschlusskörper 30 eingeführt werden. Der für den Einsatz beim Ausgleichskörper der erfindungsgemäßen Ausgleichsvorrichtung vorteilhaft geeignete, nach dem Aushärten der vernetzten Mischung fertiggestellte Polyurethan-Weichschaum besitzt eine Wärmekapazität von 20°C > 1J/gK, bevorzugt einen Wert zwischen 1,4 J/gK bis 1,9 J/gK, wobei der ein Maß für die Porosität des Schaummaterials bildende Strömungswiderstand zwischen 1400 bis 3800 Ns/m³ beträgt. Wie die Fig. 1 zeigt, ist der sich in vertikaler Richtung in das Gehäuse 2 erstreckende Ausgleichskörper 14 im Gehäuse 2 in einem Eckbereich an der oberen Gehäusewand 4 angebracht, der sich in der Nähe der Ecke 38 befindet, an der die obere Gehäusewand 4, die die Anschlussstellen 10 enthaltende Gehäusewand 4 und die die Serviceöffnung 6 enthaltende Gehäusewand 4 zusammenlaufen. Bei dieser Anordnung befindet sich der Ausgleichskörper 14 in einem Gehäuseteil, das gegenüber dem Haupt-Strömungsbereich des von den Anschlussstellen 8 zu den Anschlussstellen 10 strömenden Fluids sowohl nach oben hin als auch zur Seite hin versetzt ist, und mit vergleichsweise beruhigter Strömung, so dass der Ausgleichskörper 14 einer geringeren Belastung durch ihn schädigende Strömungskräfte ausgesetzt ist.

## Patentansprüche

1. Ausgleichsvorrichtung, in Form eines Tanks, dessen Gehäuse (2) zumindest in einer seiner Gehäusewandungen (4) mindestens einen Ein- (8) und einen Auslass (10) für die Aufnahme bzw. die Abgabe von Fluid aufweist und das mit dem Fluid auffüllbar ist, wobei innerhalb des Gehäuses (2) mindestens ein Ausgleichskörper (14) angeordnet ist, der unter Begrenzung seines Innenraums zumindest teilweise mit einer elastisch nachgiebigen Trennwand (20) versehen ist, wobei der Innenraum bei Durchgriff (12, 32) einer der Gehäusewandungen (4) mit der Umgebung zumindest teilweise in druckausgleichender Verbindung (32) ist, und wobei das Gehäuse (2), bis auf das Vorhandensein von Durchgriffsstellen, wie dem jeweiligen Ein-(8) und dem Auslass (10) sowie der jeweiligen druckausgleichenden Verbindung (32), eine geschlossene Umhausung für das in dem Gehäuse (2) aufgenommene Fluid ausbildet, **dadurch gekennzeichnet, dass** das Gehäuse (2) ein zusätzliches Fluidvolumen aufnimmt, etwa gebildet aus einem Pendelvolumen des Fluids und/oder einer Volumenzunahme des im Gehäuse (2) bevorrateten Fluids bei Temperaturerhöhung, das maximal dem Verdrängungsvolumen entspricht, das durch das Verformen der Trennwand (20) des jeweiligen Ausgleichskörpers (14) in Richtung seines Innenraums entsteht, dass der Ausgleichskörper (14) als elastisch nachgiebige Trennwand eine flexible Speicherblase (20) aus Elastomermaterial aufweist, deren Innenraum zumindest teilweise mit Schaummaterial (22) befüllt ist, dass zum Schutz der Speicherblase (20) vor Druckpulsationen und Druckstößen diese in einem Schutzgehäuse (16) aufgenommen ist, das zumindest teilweise für einen Fluiddurchlass mit mindestens einer Durchlassstelle (26) versehen ist, dass die flexible Speicherblase (20), zusammen mit ihrem Schutzgehäuse (16), an ihrer einer oberen Gehäusewand (4) des Gehäuses (2) zugewandten Oberseite unter Bildung des Durchgriffs (12, 32) für einen Luftaustausch zwischen dem Innenvolumen der Speicherblase (20) und der Umgebung, über eine Halterung (30, 34) an dieser oberen Gehäusewand (4) stationär festgelegt ist.

2. Ausgleichsvorrichtung nach einem der vorstehenden Ansprüche, **dadurch gekennzeichnet, dass** das Schaummaterial (22) offenzellig, hochporös und elastisch nachgiebig ausgebildet ist.

3. Ausgleichsvorrichtung nach einem der vorstehenden Ansprüche, **dadurch gekennzeichnet, dass** die flexible Blase (20) im unkomprimierten Zustand spindelförmig ist und in senkrechter Anordnung in das Gehäuse (2) hineinragt.

4. Ausgleichsvorrichtung nach einem der vorstehenden Ansprüche, **dadurch gekennzeichnet, dass** das Gehäuse (2) mit seinen Gehäusewänden (4) einen rechteckförmigen Vorratstank bildet und dass die flexible Speicherblase (20) in einem von der Durchströmung des Gehäuses (2) zumindest teilweise unberührten Eckbereich (38) in diesem festgelegt ist.

5. Ausgleichsvorrichtung nach einem der vorstehenden Ansprüche, **dadurch gekennzeichnet, dass** als Schaummaterial (22) ein Polymerpolyol eingesetzt ist, das ausgehärtet einen Polyurethan(PU)-Weichschaum bildet, der mittels eines Vernetzers, wie Diglykolamin, vernetzt ist.

6. Ausgleichsvorrichtung nach einem der vorstehenden Ansprüche, **dadurch gekennzeichnet, dass** der fertig hergestellte Polyurethan-Weichschaum eine Wärmekapazität von 20°C > 1J/gK, bevorzugt mit einem Wert zwischen 1,4 J/gK bis 1,9 J/gK, aufweist, bei einem Strömungswiderstand als Maß für die Porosität des Schaummaterials (22) zwischen 1400 bis 3800 Ns/m³.

## Claims

1. Compensation device in the form of a tank, the housing (2) of which, at least in one of its housing walls (4), comprises at least one inlet (8) and one outlet (10) for receiving or discharging fluid and can be topped up with fluid, wherein at least one compensation body (14) is arranged inside the housing (2), said body being furnished at least partially with an elastically flexible separating wall (20), delimiting its inner chamber, wherein the inner chamber is at least partially in a pressure-compensating connection with the environment by penetration (12, 32) through one of the housing walls (4), and wherein the housing (2), apart from the presence of penetration points, such as the respective inlet (8) and outlet (10) and the respective pressure-compensating connection (32), forms a closed enclosure for the fluid received in the housing (2), **characterised in that** the housing (2) receives an additional fluid volume, which may be formed by a variable volume of the fluid and/or an increase in the volume of the fluid stored in the housing (2) when the temperature rises, said volume corresponding to no more than the displacement volume that arises as a result of deformation of the separating wall (20) of the respective compensation body (14) in the direction of its inner chamber, **in that** the compensation body (14), as an elastically flexible separating wall, comprises a flexible accumulator bladder (20) made from elastomer material, the inner chamber of which is at least partially filled with foam material (22), **in that**, to protect the accumulator bladder (20) from pressure pulsing and pressure surges, said accumulator bladder is received in a protective housing (16), which is at least partially furnished with at least one passage point (26) for a fluid passage, **in that** the flexible accumulator bladder (20), together with its protective housing (16), on its upper side facing an upper housing wall (4) of the housing (2), forming the penetration (12, 32) for an air exchange between the inner volume of the accumulator bladder (20) and the environment, is fixed in a stationary manner to this upper housing wall (4) by means of a holder (30, 34).

2. Compensation device according to any one of the preceding claims, **characterised in that** the foam material (22) is designed to be a highly porous and elastically flexible open-cell material.

3. Compensation device according to any one of the preceding claims, **characterised in that** the flexible bladder (20) is in the form of a spindle in the non-compressed state and protrudes into the housing (2) in a vertical configuration.

4. Compensation device according to any one of the preceding claims, **characterised in that** the housing (2) forms a rectangular storage tank with its housing walls (4) and **in that** the flexible accumulator bladder (20) is fixed in said housing in a corner region (38) which is at least partially undisturbed by the flow through the housing (2).

5. Compensation device according to any one of the preceding claims, **characterised in that** a polymer polyol is used as a foam material (22), forming a flexible polyurethane (PU) foam when cured, said foam being cross-linked by means of a cross-linker such as diglycolamine.

6. Compensation device according to any one of the preceding claims, **characterised in that** the finished flexible polyurethane foam has a thermal capacity of 20°C > 1 J/gK, preferably with a value of between 1.4 J/gK to 1.9 J/gK, with a flow resistance as a measure of the porosity of the foam material (22) of between 1,400 to 3,800 Ns/m³.

## Revendications

1. Dispositif de compensation sous la forme d'un réservoir, dont l'enveloppe (2) a au moins dans l'une de ses parois (4) au moins une entrée (8) et une sortie (10) pour la réception et respectivement la distribution de fluide et qui peut être remplie du fluide, dans lequel à l'intérieur de l'enveloppe (2) est disposé au moins un corps (14) de compensation, qui, en en délimitant l'espace intérieur, est pourvu au moins en partie d'une paroi (20) de séparation cédant élastiquement, dans lequel l'espace intérieur est, par traversée (12, 32) de l'une des parois (4) de l'enveloppe, en communication (32), compensant au moins en partie la pression, avec l'atmosphère ambiante et dans lequel l'enveloppe (2), à l'exception de la présence de points de traversée comme l'entrée (8) et la sortie (10) ainsi que la communication (32) compensant la pression, constitue une enceinte fermée pour le fluide reçu dans l'enveloppe (2) **caractérisé en ce que** l'enveloppe (2) reçoit un volume de fluide supplémentaire, constitué par exemple d'un volume oscillant du fluide et/ou d'une augmentation de volume du fluide mis en réserve dans l'enveloppe (2) si la température s'élève, qui correspond au maximum au volume de déplacement qui se crée à la déformation de la paroi (20) de séparation du corps (14) de compensation en direction de son espace intérieur **en ce que** le corps (14) de compensation a comme paroi de séparation cédant élastiquement une vessie (20) d'accumulateur souple en matière élastomère, dont l'espace intérieur est rempli au moins en partie de matière (22) alvéolaire, **en ce que**, pour protéger la vessie (20) d'accumulateur des pulsations de pression et des coups de bélier, celle-ci est reçue dans un boîtier (16) de protection, qui est pourvu au moins en partie, pour un passage du fluide, d'au moins un point (26) de traversée, **en ce que** la vessie (20) souple d'accumulateur est, ensemble avec son boîtier (16) de protection, à son côté supérieur tourné vers la paroi (4) supérieure de l'enveloppe (2) avec formation de la traversée (12, 32) pour un échange d'air entre le volume intérieur de la vessie (20) d'accumulateur et l'atmosphère ambiante, fixée de manière permanente par une fixation (30, 34) à cette paroi (4) supérieure de l'enveloppe.

2. Dispositif de compensation suivant l'une des revendications précédentes, **caractérisé en ce que** la matière (22) alvéolaire est à pores ouverts, très poreuse et cède élastiquement.

3. Dispositif de compensation suivant l'une des revendications précédentes, **caractérisé en ce que** la vessie (20) souple d'accumulateur est, à l'état non comprimé, en forme de fuseau et pénètre, suivant un agencement perpendiculaire, dans l'enveloppe (2).

4. Dispositif de compensation suivant l'une des revendications précédentes, **caractérisé en ce que** l'enveloppe (2) forme par ses parois (4) un réservoir de forme rectangulaire et **en ce que** la vessie (20) souple d'accumulateur est fixée dans l'enveloppe par une partie (38) de coin au moins en partie non touchée par la traversée de l'enveloppe (2).

5. Dispositif de compensation suivant l'une des revendications précédentes, **caractérisé en ce que** l'on utilise comme matière (22) alvéolaire un polyol polymère qui, durci, forme une mousse souple de polyuréthane (PU) réticulée au moyen d'un agent réticulant, comme la diglycolamine.

6. Dispositif de compensation suivant l'une des revendications précédentes, **caractérisé en ce que** la mousse souple de polyuréthane a de fabrication une capacité calorifique à 20°C>1J/gK, ayant de préférence une valeur entre 1,4J/gK à 1,9J/gK, pour une résistance à l'écoulement comme mesure de la porosité de la matière (22) alvéolaire comprise entre 1 400 et 3 800 Ns/m³.
